# EUROPÄISCHE PATENTSCHRIFT

(11) **EP 0 895 009 B1**
(45) Veröffentlichungstag und Bekanntmachung des Hinweises auf die Patenterteilung: **04.08.2004**
(21) Anmeldenummer: 98106002.3
(22) Anmeldetag: 02.04.1998
(51) Int. Cl.: F16J 15/32

(54) **"Radialwellendichtring"**
Radial shaft seal
Joint d'arbre radial

(30) Priorität: 02.08.1997 DE 19733554
(43) Veröffentlichungstag der Anmeldung: 03.02.1999
(73) Patentinhaber: Carl Freudenberg KG, 69469 Weinheim (DE)
(72) Erfinder: Lutaud, Dominique, 52360 Orbigny au Mont (FR)

(56) Entgegenhaltungen:
- EP-A- 0 754 892
- DE-A- 3 418 738
- DE-A- 3 640 346
- DE-A- 19 532 701
- US-A- 5 052 696
- US-A- 5 056 799
- US-A- 5 607 168

## Beschreibung

### Technisches Gebiet

Radialwellendichtringe werden zum Abdichten von Wellendurchgängen durch eine Wand gegenüber den umliegenden Bereichen verwendet. Dabei werden in der Regel zwei unteschiedliche Dichtungskonzepte verwendet: eine statische Abdichtung zur Wand hin und eine dynamische Abdichtung zur Welle hin.

### Stand der Technik

Aus der FR-OS 2 443 625 ist ein Radialwellendichtring gemäß Oberbegriff des Anspruchs 1 bekannt, der einen Stützring mit einem äußeren axialen Schenkel, einem inneren axialen Schenkel und einer diese beiden Schenkel verbindenden radialen Scheibe sowie einer sich vom inneren Schenkel radial nach innen erstreckenden radialen Schulter umfaßt. Weiterhin weist der Radialwellendichtring eine Elastomerbeschichtung und ein ringförmiges Dichtelement aus einem Material geringer Reibung auf, wobei das ringförmigen Dichtelement zwischen der Elastomerbeschichtung und der radialen Schulter angeordnet ist.

Der Nachteil dieses Radialwellendichtrings besteht darin, daß Öl aus dem Innenraum des abzudichtenden Gehäuseteils zwischen das Dichtelement und die Elastomerbeschichtung gelangen kann und somit für die Elastomerbeschichtung ein besonderer Werkstoff verwendet werden muß, um Verschlechterungen der Dichtwirkung des Dichtelements während der Gebrauchsdauer des Radialwellendichtrings zu vermeiden. Insbesondere muß der Werkstoff widerstandsfähig gegen Quellung oder Aufweichungen sein.

Aus der EP-PS 0 284 496 sind Radialwellendichtringe mit einem Stützkörper in L-Form bekannt, auf dessen radialem Schenkel zum begrenzten Innenraum hin eine Elastomerauflage aufgebracht ist, auf welcher wiederum eine Dichtscheibe aus Polytetraluorethylen (PTFE) aufgeklebt ist.

Zur Zentrierung der Dichtscheibe ist gemäß einem innerbetrieblichen Stand der Technik die Dichtscheibe bis an die axiale Innenfläche verlängert, wodurch an der Mantelfläche des Dichtelements zwar ein kurzer Dichtspalt entsteht, die Abdichtung aber nicht vollständig bewirkt wird. Selbst ein Klebstoffauftrag bietet nur eine unvollständige Lösung, da zwischen PTFE und Metall keine Bindung möglich ist und die Kontrolle einer Klebestelle schwierig ist. Aus diesem Grund werden Werkstoffe wie Polyacrylatmischungen (ACM) oder Fluoroelastomer (FPM) verwendet, die von dem Öl nicht angegriffen werden.

Aus der US 5,607,168 ist ein Radialwellendichtring bekannt, dessen Dichtelement an die Stützfläche angepresst wird, wodurch die Dichtwirkung zwischen Dichtelement und Stützfläche erzeugt wird.

Der Nachteil dieses Radialwellendichtrings besteht darin, dass das Dichtelement an seinem Außenumfang nicht am Stützkörper zentriert wird, da in den Kerben des Dichtelements Elastomer vorhanden ist. Das Dichtelement muss während der Herstellung des Radialwellendichtrings in einer zentrierten Position fixiert werden.

Das Problem besteht folglich darin, einen Radialwellendichtring so auszugestalten, daß eine Berührung der Elastomerbeschichtung mit Öl oder sonstigem abzudichtendem Medium zuverlässig vermieden wird, sodaß der Einsatz von kostengünstigen Werkstoffen möglich wird. Des weiteren soll der Radialwellendichtring einfach herstellbar sein.

### Darstellung der Erfindung

Erfindungsgemäß ist das Dichtelement mit dem Stützring durch rein mechanische Verankerung verbunden, indem die Elastomerbeschichtung unter Erzeugung des an der Dichtfläche erforderlichen Dichtdrucks an der Scheibe des Dichtelements anliegt und dass der Außenumfang der Scheibe des Dichtelements direkt an der Mantelfläche des inneren axialen Schenkel anliegt, so dass die Scheibe des Dichtelements am inneren axialen Schenkel des Stützrings zentriert ist. Hierdurch wird eine von der Zentrierung unabhängige Dichtfläche geschaffen. Weiterhin ist zwischen dem in der Regel metallischen Stützkörper und dem üblicherweise aus PTFE bestehenden Dichtelement eine Klebung nicht mehr erforderlich, da das Dichtelement mechanisch fest eingespannt ist. Durch die Zentrierung des Dichtelements im axialen Schenkel des Dichtrings wird die Fertigung des Radialwellendichtrings vereinfacht, da eine zusätzliche Fixierung während der Fertigung entfällt. Darüber hinaus ist durch die Verringerung des Innendurchmessers für das Dichtelement eine Reduzierung der hierfür anfallenden Kosten erfolgt.

Eine vorteilhafte Weiterbildung besteht darin, daß die Dichtfläche als Labyrinthdichtung ausgebildet ist. Hierdurch wird die Dichtwirkung weiter verbessert und die Sicherheit gegen Berührung der Elastomerbeschichtung mit Medium erhöht.

Vorteilhafterweise besteht das ringförmigen Dichtelement aus einem Fluorkunststoff, insbesondere Polytetrafluorethylen (PTFE), welches eine geringe Reibung zu Metall aufweist und eine einfache Verarbeitung erlaubt.

Wegen der sicheren Abdichtung ist es besonders vorteilhaft, zum Zweck der Kostenersparnis preiswerte Elastomere wie Ethylenpropylen (EPDM) und Silikon (VMQ) als Werkstoff zu verwenden. Dadurch läßt sich auch die Vulkanisationszeit verkürzen. In vielen Anwendungsfällen ist dieser Werkstoff mit dem abzudichtenden Medium unverträglich.

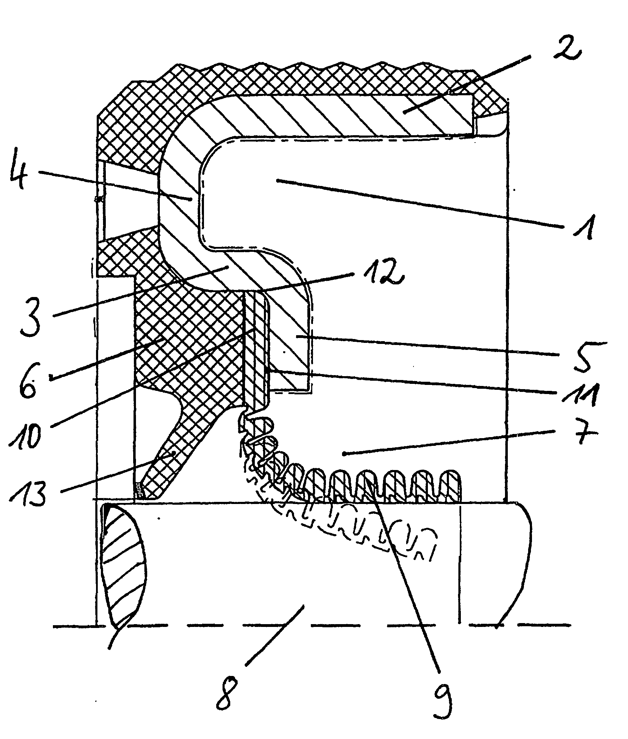

### Kurzbeschreibung der Zeichnung

In der Zeichnung ist ein Radialwellendichtring gemäß der Erfindung im Längsschnitt stark vergrößert mit nicht maßstabsgerechter Welle dargestellt.

### Ausführung der Erfindung

Der Radialwellendichtring umfaßt einen Stützring 1 mit einem äußeren axialen Schenkel 2, einem inneren axialen Schenkel 3 und einer diese beiden Schenkel 2,3 verbindenden radialen Scheibe 4 sowie einer sich vom inneren Schenkel 3 radial nach innen erstreckenden radialen Schulter 5.

Der Stützkörper 1 ist auf seiner der Umgebung zugewandten Seite mit einer Elastomerbeschichtung 6 versehen, die sich sowohl über den äußeren Schenkel 2 wie auch über die Scheibe 4 und ein Stück weit entlang des inneren Schenkels 3 erstreckt.

Ein ringförmiges Dichtelement 7, das aus einem Material geringer Reibung besteht, weist eine zur Anlage an eine Welle 8 bestimmte Dichtlippe 9 auf. Die Dichtlippe 9 ist mit einer Scheibe 10 verbunden, welche eine Dichtfläche 11 zu der radialen Schulter 5 des Stützrings 1 bildet. Die Scheibe 10 ist zwischen der Elastomerbeschichtung 6 und der radialen Schulter 5 angeordnet.

Zur Erzeugung des erforderlichen Dichtdrucks an der Dichtfläche wird die Scheibe 10 von der Elastomerbeschichtung 6 unter Vorspannung an die Schulter 5 gedrückt. Die Elastomerbeschichtung 6 ist an dem inneren Schenkel 3 befestigt und erhält über diese Verbindung die Vorspannung aufrecht.

Das Dichtelement 7 ist aus PTFE und wird an der Mantelfläche 12 am inneren Schenkel 3 des Stützkörpers 1 zentriert. Das Dichtelement ist weder mit der Elastomerbeschichtung 6 aus EPDM oder VMQ noch mit der Schulter 5 oder dem inneren Schenkel 3 des metallischen Stützkörpers 1 verbunden sondern ohne Klebung eingespannt. Diese rein mechanische Verankerung genügt für die Erzeugung einer ausreichenden Dichtheit an der Dichtfläche 11. Die Vermeidung von Berührungen des abzudichtenden Mediums mit der Elastomerauflage 6 ist gerade in dem Bereich des Dichtelements 7 von besonderer Bedeutung, da hier eine Veränderung der geometrischen Verhältnisse durch Quellung oder Auflösung der Elastomerauflage 6 unmittelbare Auswirkungen auf die Anlage der Dichtlippe 9 an die Welle 8 und damit die Funktionsfähigkeit des Radialwellendichtrings insgesamt hat.

Zum Schutz gegen aus der Umgebung an die Dichtlippe 9 herangetragene Staubpartikel oder Abrieb von anderen Bauteilen, beispielsweise von Kupplungsbelägen, kann an der Elastomerbeschichtung 6 eine Staublippe 13 angebracht sein, die sich in entgegengesetzter axialer Richtung wie die Dichtlippe 9 erstreckt.

## Patentansprüche

1. Radialwellendichtring, umfassend einen Stützring (1) mit einem äußeren axialen Schenkel (2), einem inneren axialen Schenkel (3) und einer diese beiden Schenkel verbindenden radialen Scheibe (4) sowie einer sich vom inneren Schenkel (3) radial nach innen erstreckenden radialen Schulter (5), wobei der innere axiale Schenkel (3) eine axiale innere Mantelfläche (12) aufweist, weiterhin umfassend eine Elastomerbeschichtung (6) und ein ringförmiges Dichtelement (7) aus einem Material geringer Reibung, wobei das ringförmigen Dichtelement (7) zwischen der Elastomerbeschichtung (6) und der radialen Schulter (5) angeordnet ist, und wobei das ringförmige Dichtelement (7) eine Scheibe (10) aufweist, welche eine Dichtfläche (11) zu der radialen Schulter (5) des Stützrings (1) bildet, **dadurch gekennzeichnet, dass** das Dichtelement (7) mit dem Stützring (1) durch rein mechanische Verankerung verbunden ist, indem die Elastomerbeschichtung (6) unter Erzeugung des an der Dichtfläche (11) erforderlichen Dichtdrucks an der Scheibe (10) des Dichtelements (7) anliegt und dass der Außenumfang der Scheibe (10) des Dichtelements (7) direkt an der Mantelfläche (12) des inneren axialen Schenkels (3) anliegt, so dass die Scheibe (10) des Dichtelements (7) am inneren axialen Schenkel (3) des Stützrings (1) zentriert ist.

2. Radialwellendichtring nach Anspruch 1, **dadurch gekennzeichnet, daß** die Dichtfläche als Labyrinthdichtung ausgebildet ist.

3. Radialwellendichtring nach nach Anspruch 1 oder 2, **dadurch gekennzeichnet, daß** das ringförmigen Dichtelement (7) aus einem Flourkunststoff, insbesondere Polytetrafluorethylen (PTFE) besteht.

4. Radialwellendichtring nach einem der Ansprüche 1 bis 3, **dadurch gekennzeichnet, daß** die Elastomerbeschichtung (8) aus einem mit dem abzudichtenden Medium unverträglichen Werkstoff besteht, insbesondere aus EPDM oder VMQ.

## Claims

1. A radial shaft sealing ring, comprising a supporting ring (1) with an outer axial shank (2), an inner axial shank (3) and a radial disc (4) connecting these two shanks, and also a radial shoulder (5) extending radially inwards from the inner shank (3), the inner axial shank (3) having an axial inner circumferential surface (12), further comprising an elastomer coating (6) and an annular sealing element (7) of a material of low friction, the annular sealing element (7) being arranged between the elastomer coating (6) and the radial shoulder (5), and the annular sealing element (7) having a disc (10) which forms a sealing face (11) with respect 'to the radial shoulder (5) of the supporting ring (1), **characterized in that** the sealing element (7) is connected to the supporting ring (1) by a purely mechanical anchorage, **in that** the elastomer coating (6) bears against the disc (10) of the sealing element (7) while producing the sealing pressure required on the sealing face (11), and **in that** the outer circumference of the disc (10) of the sealing element (7) bears directly against the circumferential surface (12) of the inner axial shank (3), so that the disc (10) of the sealing element (7) is centred on the inner axial shank (3) of the supporting ring (1).

2. A radial shaft sealing ring according to claim 1, **characterized in that** the sealing face is formed as a labyrinth seal.

3. A radial shaft sealing ring according to claim 1 or 2, **characterized in that** the annular sealing element (7) is composed of a fluoroplastic, in particular polytetrafluoroethylene (PTFE).

4. A radial shaft sealing ring according to any one of claims 1 to 3, **characterized in that** the elastomer coating (8) is composed of a material that is incompatible with the medium to be sealed off, in particular of EPDM or VMQ.

## Revendications

1. Bague d'étanchéité à lèvres radiale, comprenant une bague de support (1) qui comprend une branche axiale extérieure (2), une branche axiale intérieure (3) et un disque radial (4) reliant ces deux branches ainsi qu'un épaulement radial (5) s'étendant vers l'intérieur dans le sens radial depuis la branche intérieure (3), la branche axiale intérieure (3) étant pourvue d'une surface périphérique intérieure axiale (12), comprenant, en outre, un revêtement élastomère (6) et un élément d'étanchéité annulaire (7) formé d'un matériau à frottement réduit, l'élément d'étanchéité annulaire (7) étant situé entre le revêtement élastomère (6) et l'épaulement radial (5) et l'élément d'étanchéité annulaire (7) comprenant un disque (10) qui forme une surface d'étanchéité (11) vis-à-vis de l'épaulement radial (5) de la bague de support (1), **caractérisé en ce que** l'élément d'étanchéité (7) est relié à la bague de support (1) par un ancrage purement mécanique en faisant en sorte que le revêtement élastomère (6) soit en contact avec le disque (10) de l'élément d'étanchéité (7) en produisant la pression d'étanchéité nécessaire sur la surface d'étanchéité (11) et **en ce que** la circonférence extérieure du disque (10) de l'élément d'étanchéité (7) est en contact direct avec la surface périphérique (12) de la branche axiale intérieure (3) de manière à ce que le disque (10) de l'élément d'étanchéité (7) soit centré sur la branche axiale intérieure (3) de la bague de support (1 ).

2. Bague d'étanchéité à lèvres radiale selon la revendication 1, **caractérisé en ce que** la surface d'étanchéité est exécutée en tant que garniture à labyrinthe.

3. Bague d'étanchéité à lèvres radiale selon la revendication 1 ou 2, **caractérisé en ce que** l'élément d'étanchéité annulaire (7) est formé d'une matière plastique fluorée, notamment de polytétrafluoréthylène (PTFE).

4. Bague d'étanchéité à lèvres radiale selon l'une des revendications 1 à 3, **caractérisé en ce que** le revêtement élastomère (8) est formé d'un matériau incompatible avec le milieu à étanchéifier, notamment EPDM ou VMQ.
